# FASCICULE DE BREVET EUROPEEN

(11) **EP 3 025 914 B1**
(45) Date de publication et mention de la délivrance du brevet: **23.10.2019**
(21) Numéro de dépôt: 15191873.7
(22) Date de dépôt: 28.10.2015
(51) Int. Cl.: B60S 1/52

(54) **BRAS DE BALAI POUR SYSTEME D ESSUYAGE D'UNE VITRE D'UN VEHICULE AUTOMOBILE AVEC UN DISPOSITIF DE PROJECTION LATERALE D'UN LIQUIDE DE LAVAGE**
WISCHERARM EINES SCHEIBENWISCHERSYSTEMS FÜR EIN KRAFTFAHRZEUG MIT EINER VORRICHTUNG ZUM SEITLICHEN SPRITZEN EINER REINIGUNGSFLÜSSIGKEIT
WIPER ARM FOR A SYSTEM FOR WIPING A PANE OF A MOTOR VEHICULE WITH A DEVICE FOR LATERAL SPRAYING OF A WASHING LIQUID

(30) Priorité: 25.11.2014 FR 1461423
(43) Date de publication de la demande: 01.06.2016
(73) Titulaire: Valeo Systèmes d'Essuyage, 78322 Le Mesnil Saint Denis (FR)
(72) Inventeur: THEBAULT, Denis, 63000 Clermont Ferrand (FR); BARRET, Guillaume, 63270 LAPS (FR)
(74) Mandataire: Callu-Danseux, Violaine

(56) Documents cités:
- FR-A1- 2 747 975
- FR-A1- 2 902 063
- JP-A- 2002 302 019
- KR-A- 20040 007 138
- US-A- 5 433 382
- US-A- 5 865 376

## Description

La présente invention se rapporte à bras de balai pour système d'essuyage d'une vitre d'un véhicule avec un dispositif de projection latérale d'un liquide de lavage et un système d'essuyage.

Pour assurer un bon nettoyage d'une vitre, la projection d'un liquide de lavage en amont de la lame d'essuyage est indispensable.

A cet effet, on connaît des buses de projection disposées au niveau de la carrosserie d'un véhicule, qui projettent du liquide lave-glace sur la vitre à nettoyer. Toutefois, le jet projeté ne vise souvent qu'une seule zone d'impact de sorte que le liquide de lavage n'agit pas de manière uniforme sur toute la surface à nettoyer.

On connaît également des bras de balai qui sont équipés de buses de projection d'un liquide de lavage. Dans ce cas, un ou plusieurs jets de lavage sont généralement projetés sur la vitre dans une direction générale perpendiculaire au plan défini par la vitre et juste en amont de la lame d'essuyage.

Pour un bras balai arrière, une telle solution est trop couteuse. En effet, comme la vitre arrière est dans l'ombre aérodynamique de la voiture, celle-ci subit moins d'impacts des salissures que le pare-brise qui est exposé de front à toutes les salissures.

C'est pourquoi le système d'essuyage de la vitre arrière est bien moins souvent actionné que le système d'essuyage du pare-brise.

Cela conduit aussi au fait que le bras de balai et son module de projection d'un liquide de lavage doivent présenter des coûts moins élevés qu'un système équivalent pour le pare-brise.

Afin d'améliorer la situation de projection de liquide de lavage, on connaît aussi des bras de balais équipés de buses de projection latéral d'un liquide de lavage. On peut par exemple citer les documents DE102010064178, FR2859963, US6094772, JP2002321599, KR20040007138 A ou DE19826846.

Toutefois, pour certains de ces documents, les buses font partie intégrale du bras de sorte que l'on ne peut pas moduler le bras pour proposer à des constructeurs des bras avec ou sans buses de projection.

Pour d'autres, la pièce portant la buse de projection est difficile et/ou couteux à réaliser, notamment avec de nombreux rebords qui sont difficiles à démouler.

La présente invention se propose de remédier au moins partiellement aux inconvénients ci-dessus mentionnés en présentant une solution simple à réaliser et peu couteuse.

A cet effet, l'invention a pour objet un bras de balai pour système d'essuyage d'une vitre d'un véhicule automobile selon la revendication 1.

Le bras de balai selon l'invention peut comporter en outre une ou plusieurs des caractéristiques suivantes prises seules ou en combinaison :
Les buses sont par exemple disposées symétriquement par rapport à l'axe défini par la canule d'alimentation.

Selon un aspect, les directions générales de projection des buses peuvent être parallèles les unes aux autres.

Selon un autre aspect les buses possèdent chacune une direction générale de projection inclinée, s'éloignant de l'axe défini par la canule d'alimentation.

De manière avantageuse, le dispositif de projection est formé d'une embase de projection et d'un couvercle d'alimentation en liquide de lavage, l'embase étant fixée au couvercle,

Le canal de distribution du liquide est formé au niveau de la jonction entre l'embase et le couvercle par complémentarité de forme d'empreintes sous forme de rainures ouvertes dont l'une est portée par l'embase et l'autre par le couvercle,

L'embase présente au niveau de chaque extrémité au moins une buse de projection et le couvercle comporte la canule d'alimentation.

L'une des empreintes est par exemple entourée d'une nervure de fixation et l'autre empreinte par une gorge de fixation complémentaire à la nervure de fixation.

L'embase et le couvercle peuvent être fixés l'un à l'autre par soudage, notamment par ultrasons.

De manière alternative, le dispositif est constitué d'une pièce monobloc,

Le dispositif présente en particulier une forme générale parallélépipédique.

On peut prévoir que le dispositif comporte des ouvertures traversantes destinées à recevoir des protubérances de soudure portées par le bras de balai.

En variante, le dispositif comporte des bras de clipsage destinés à coopérer avec des nervures associées portées par le bras de balai.

Le bras s'étend selon une direction longitudinale.

Selon un autre aspect, le bras de balai comporte des protubérances de soudure coopérant avec des ouvertures traversantes ménagées dans le dispositif de projection.

Selon encore un autre aspect, le bras comporte des nervures coopérant avec des bras de clipsage portés par dispositif de projection.

Le dispositif de projection est situé sensiblement au milieu du bras dans son sens longitudinal.

L'invention concerne également un système d'essuyage comprenant un bras de balai tel que défini ci-dessus.

D'autres avantages et caractéristiques apparaîtront à la lecture de la description de l'invention, ainsi que des dessins annexés sur lesquels :
- la figure 1 est une vue de dessus d'un système d'essuyage comprenant un bras équipé d'un dispositif de projection latérale d'un liquide de lavage,
- la figure 2 est une vue en perspective de côté du dispositif de projection latérale d'un liquide de lavage à l'état assemblé,
- la figure 3 est une vue en perspective de l'embase de projection,
- la figure 4 est une vue en perspective de l'embase de projection tourné de 180° par rapport à la figure 3,
- la figure 5 est une vue en perspective du couvercle d'alimentation,
- la figure 6 est une vue en perspective du couvercle d'alimentation tourné de 180° par rapport à la figure 5,
- la figure 7 est une vue schématique en coupe selon une ligne VII-VII de la figure 1,
- la figure 8 est une vue partielle en perspective de dessous du bras de balai,
- la figure 9 est une vue partielle en perspective de dessous du bras de balai avec un dispositif de projection latérale d'un liquide de lavage à l'état assemblé,
- la figure 10 est une vue en perspective d'un autre mode de réalisation du dispositif de projection latérale d'un liquide de lavage à l'état assemblé,
- la figure 11 est une vue en perspective d'encore un autre mode de réalisation du dispositif de projection latérale d'un liquide de lavage à l'état assemblé, et
- la figure 12 est une vue partielle en perspective de dessous du bras de balai avec un dispositif de projection latérale d'un liquide de lavage de la figure 11 à l'état assemblé.

On va maintenant décrire un exemple d'un mode de réalisation en référence aux figures.

Sur toutes les figures, les mêmes éléments portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

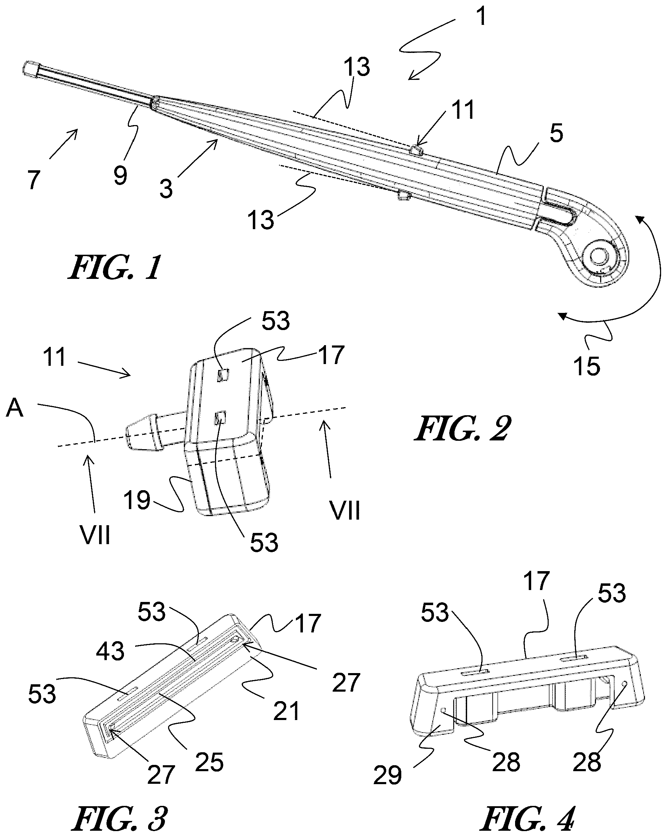

La figure 1 montre un système d'essuyage 1 comprenant un bras de balai 3, en particulier un bras de balai pour une vitre arrière d'un véhicule automobile.

Ce bras 3 comporte une coque 5, par exemple en matière plastique et un balai 7 avec une lame d'essuyage 9 pour essuyer une vitre.

Le bras 3 est de plus équipé d'un dispositif 11 de projection latérale d'un liquide de lavage ayant une forme générale parallélépipédique. Sur la figure 1, des jets projetés d'un liquide de lavage sont référencés 13.

Comme on le voit sur la figure 1, les jets 13 sont dirigés sensiblement parallèle à l'étendu longitudinale du bras 3 et du balai 7, de sorte que lors de mouvements d'essuyage en va et vient, indiqué par la flèche 15, la vitre est aspergée en amont et en aval du passage par la lame d'essuyage 9. Pour un cycle de nettoyage, on va projeter du liquide de lavage sur la vitre lors du premier ou des premiers mouvements de va et vient, puis s'ensuivent une ou plusieurs mouvements de va et vient sans projection de liquide pour sécher la vitre. Le dispositif de projection est situé sensiblement au milieu du bras 3 dans le sens longitudinal. De manière particulièrement avantageuse et comme visible sur la figure 1, le dispositif de projection est situé au droit d'une extrémité inférieure de la lame d'essuyage afin de projeter le liquide sur la totalité de la longueur de la lame d'essuyage.

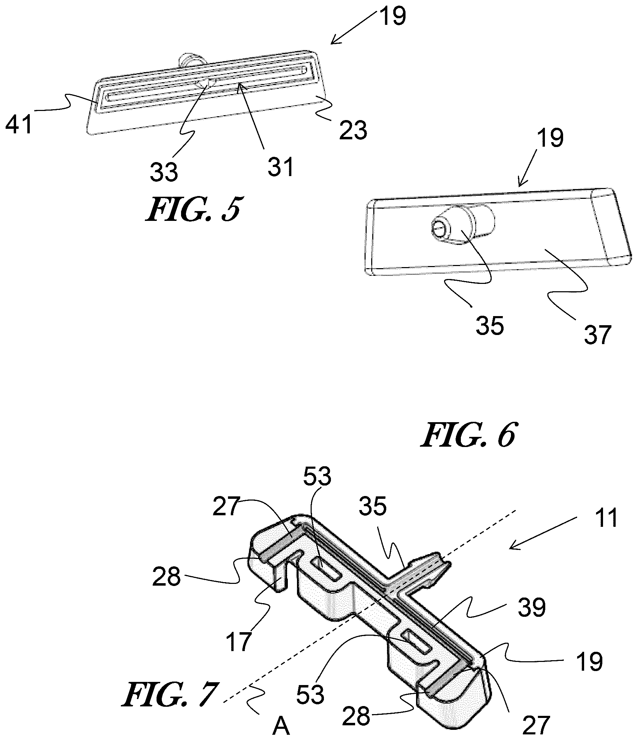

Le dispositif 11 de projection latérale d'un liquide de lavage est représenté en perspective dans son ensemble à la figure 2 et est formé d'une embase 17 de projection (voir figures 3 et 4) et d'un couvercle 19 d'alimentation en liquide de lavage (voir figures 5 et 6), fixés l'un à l'autre. L'embase 17 et le couvercle 19 sont exemple en matière plastique et réalisés par injection.

La figure 3 montre la face 21 de l'embase 17 destinée à être en contact / fixée à une face correspondante 23 du couvercle 19 montrée sur la figure 5.

Sur cette face 21 est ménagée une empreinte 25 sous forme d'une rainure ouverte. Aux extrémités de cette empreinte 25, deux trous 27 sont pratiqués débouchant sur la face 29 de l'embase 17 opposée à la face 21 (voir figure 4). Ces trous 27 forment des buses 28 de projection du liquide de lavage.

Comme visible sur la figure 5, sur la face 23 du couvercle 19 est également ménagée une empreinte 31 sous forme d'une rainure ouverte.

En son centre, cette empreinte 31 présente un canal d'alimentation 33 formé par une canule d'alimentation 35 réalisée d'une seule pièce avec le couvercle 19 et disposée sur la face 37 du couvercle opposée à la face 23 (voir figure 6). La canule d'alimentation 35 est destinée à être raccordée à un tuyau souple d'alimentation (non représenté) d'un liquide de lavage.

Ainsi, lorsque l'embase 17 et le couvercle 19 sont assemblés, les empreintes 25 et 31 forment, par complémentarité de forme, un canal de distribution du liquide de lavage 39.

Ce canal de distribution 39 est bien visible sur la figure 7 montrant une coupe en section transversale dans l'épaisseur du dispositif 11 de projection latérale d'un liquide de lavage. On y voit bien comment le liquide de lavage entrant par la canule 35 est ensuite divisé en deux flux et distribué jusqu'aux buses de projection 28. On comprend donc que l'embase 17 présente au niveau de chaque extrémité au moins une, dans le présent cas deux buses 28 de projection qui sont reliées fluidiquement au canal de distribution 39, et que la canule d'alimentation 35 est également reliée fluidiquement au canal de distribution 39.

Les buses 28 et la canule d'alimentation 35 sont donc reliées fluidiquement par l'intermédiaire du canal de distribution 39, et les buses 28 sont disposées de part et d'autre d'un axe A défini par la canule d'alimentation 35.

Plus spécifiquement, les buses 28 sont disposées symétriquement par rapport à l'axe A défini par la canule d'alimentation 35.

Comme on le voit sur les figures, les directions générales de projection des buses 28 sont parallèles les unes aux autres et aussi parallèle à l'axe de la canule d'alimentation 35.

Selon une variante non représentée, les buses 28 possèdent chacune une direction générale de projection inclinée, s'éloignant de l'axe A défini par la canule d'alimentation 35, en direction de la lame d'essuyage 9. Dans cette variante, les directions générales de projection des buses 28 peuvent être parallèles ou convergentes en direction de la lame d'essuyage 9.

Pour faciliter l'assemblage et garantir en même temps une étanchéité, l'une des empreintes, ici l'empreinte 35 du couvercle 19 est entourée d'une nervure de fixation 41 (figure 5) et l'autre empreinte, ici l'empreinte 25, par une gorge de fixation 43 complémentaire à la nervure de fixation 41.

Ainsi, pour l'assemblage, il faut seulement poser le couvercle 19 sur l'embase 17 et puis les fixer l'un à l'autre, par exemple par soudage, notamment par ultrasons.

Comme visible également à la figure 7, nous pouvons noter que le canal d'alimentation 35 et les buses 28 se trouvent dans le même plan de coupe.

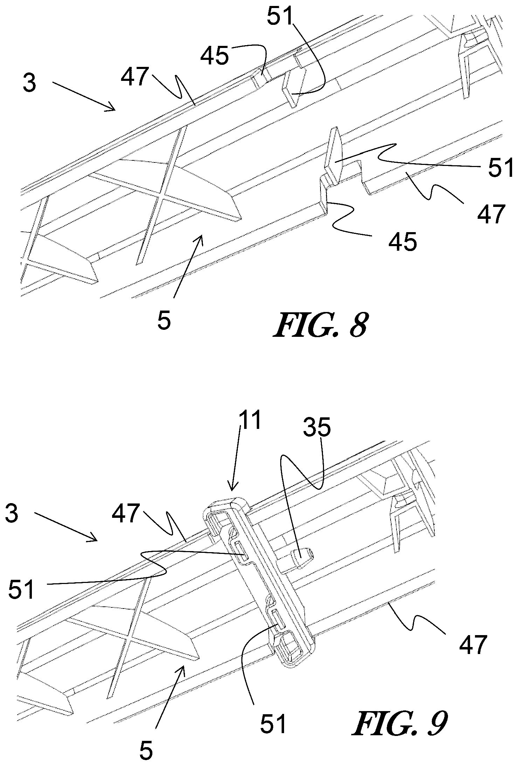

En se référant à la figure 8, pour la projection latérale du liquide de lavage, le bras de balai 3 comporte des ouvertures de positionnement 45 dans sa paroi latérale 47 de sa coque 5, et l'extension longitudinale du dispositif 11 est telle qu'à l'état monté, le dispositif de projection 11 dépasse latéralement, avec ses buses de projection 28, le bras de balai 3 (figures 1 et 9).

Pour la fixation du dispositif 11 au bras de balai 3, la coque 5 présente sur sa face inférieure, c'est-à-dire celle destinée à être en face d'une vitre, des protubérances de soudure 51.

Ces protubérances de soudure 51 coopèrent dans un premier temps par enfichage avec des ouvertures traversantes 53 ménagées dans l'embase 17 parallèlement au plan de jonction entre l'embase 17 et le couvercle 19 (voir en particulier figures 2, 3, 4, 7 et 9).

Une fois enfiché comme visible sur la figure 9, on peut par exemple souder par ultrasons le dispositif de projection 11 aux protubérances 51.

Comme visible sur les figures, on remarque que la canule d'alimentation 35 s'étend selon la même direction longitudinale que le bras de balai 3. La canule d'alimentation 35 se retrouve donc cachée par le bras ce qui améliore l'esthétique de l'ensemble mais protège aussi le dispositif de projection des agressions extérieures.

On comprend donc que le dispositif 11 de projection est simple à fabriquer et peu couteux par simple assemblage d'une embase 17 avec un couvercle 19, l'ensemble peut être monté facilement sur le bras de balai 3.

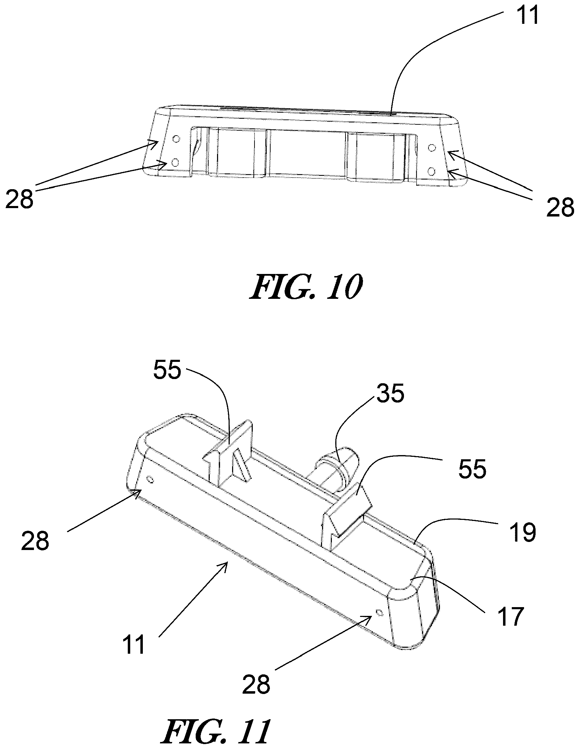

La figure 10 montre une variante d'un dispositif 11 de projection qui se distingue de celui des figures 1 à 9 par le fait qu'il présente quatre au lieu de deux buses de projection 28, deux par extrémité et disposées l'une au-dessus de l'autre.

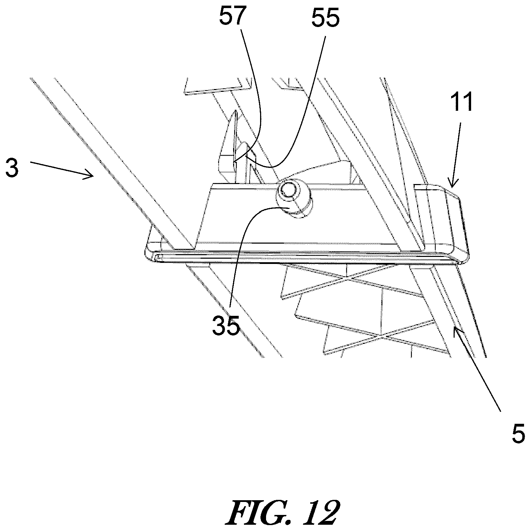

Les figures 11 et 12 montre encore une autre variante du dispositif de projection 11 qui se distingue par le fait que les ouvertures traversantes 53 sont remplacées par des bras de clipsage 55 destinés à coopérer avec des nervures associées 57 portées par le bras de balai 3 (voir figure 12).

## Revendications

1. Bras de balai (3) pour système d'essuyage d'une vitre d'un véhicule automobile, le bras de balai (3) comprend un dispositif de projection latérale (11) afin de permettre la projection de liquide de chaque coté latéral du balai, le dispositif de projection latérale (11) comporte une canule d'alimentation (35), un canal de distribution du liquide (39) et au moins deux buses de projection (28) du liquide, les buses (28) et la canule d'alimentation (35) étant reliées fluidiquement par l'intermédiaire du canal de distribution (39), les buses (28) sont disposées de part et d'autre d'un axe (A) défini par la canule d'alimentation (35) **caractérisé en ce que** le bras (3) comporte une ouverture de positionnement (45) dans chaque paroi latérale (47) et **en ce qu'**à l'état monté, le dispositif (11) de projection dépasse latéralement, avec ses buses de projection (28), du bras de balai (3).

2. Bras de balai (3) selon la revendication 1, **caractérisé en ce que** les buses (28) sont disposées symétriquement par rapport à l'axe (A) défini par la canule d'alimentation (35).

3. Bras de balai (3) selon la revendication 1 ou 2, **caractérisé en ce que** les buses (28) possèdent chacune une direction générale de projection parallèle les unes aux autres.

4. Bras de balai (3) selon l'une quelconque des revendications 1 à 3 **caractérisé en ce que** les buses (28) possèdent chacune une direction générale de projection inclinée, s'éloignant de l'axe (A) défini par la canule d'alimentation.

5. Bras de balai (3) selon l'une quelconque des revendications précédentes **caractérisé en ce que** le dispositif de projection latérale (11) est formé d'une embase de projection (17) et d'un couvercle d'alimentation (19) en liquide de lavage, l'embase (17) étant fixée au couvercle (19), et **en ce que** le canal de distribution du liquide (39) est formé au niveau de la jonction entre l'embase (17) et le couvercle (19) par complémentarité de forme d'empreintes (25, 31) sous forme de rainures ouvertes dont l'une (25) est portée par l'embase (17) et l'autre (31) par le couvercle (19), **en ce que** l'embase (17) présente au niveau de chaque extrémité au moins une buse de projection (28) et le couvercle (19) comporte la canule d'alimentation (35).

6. Bras de balai (3) selon la revendication précédente, **caractérisé en ce que** l'une des empreintes (31) est entourée d'une nervure de fixation (41) et l'autre empreinte (25) par une gorge de fixation (43) complémentaire à la nervure de fixation (41).

7. Bras de balai (3) selon l'une quelconque des revendications 5 à 6, **caractérisé en ce que** l'embase (17) et le couvercle (19) sont fixés l'un à l'autre par soudage, notamment par ultrasons.

8. Bras de balai (3) selon l'une quelconque des revendications 1 à 4 **caractérisé en ce que** le dispositif de projection latérale (11) est constitué d'une pièce monobloc.

9. Bras de balai (3) selon l'une quelconque des revendications précédentes, **caractérisé en ce que** le dispositif de projection latérale (11) présente une forme générale parallélépipédique.

10. Bras de balai (3) selon l'une quelconque des revendications précédentes, **caractérisé en ce que** le dispositif de projection latérale (11) comporte des ouvertures traversantes (53) destinées à recevoir des protubérances (51) de soudure portées par le bras de balai (3).

11. Bras de balai (3) selon l'une quelconque des revendications 1 à 9, **caractérisé en ce que** le dispositif de projection latérale (11) comporte des bras de clipsage (55) destinés à coopérer avec des nervures associées (57) portées par le bras de balai (3).

12. Bras de balai (3) selon la revendication 10, **caractérisé en ce que** le bras comporte des protubérances de soudure (51) coopérant avec des ouvertures traversantes (53) ménagées dans le dispositif de projection.

13. Bras de balai (3) selon la revendication 11, **caractérisé en ce que** le bras (3) comporte des nervures (57) coopérant avec des bras de clipsage (55) portés par le dispositif de projection.

14. Bras de balai (3) selon l'une des revendications précédentes **caractérisé en ce que** le dispositif (11) de projection est situé sensiblement au milieu du bras dans son sens longitudinal.

15. Système d'essuyage (1) comprenant un bras de balai selon l'une quelconque des revendications 1 à 14.

## Patentansprüche

1. Wischerarm (3) eines Scheibenwischersystems für ein Kraftfahrzeug, wobei der Wischerarm (3) eine Vorrichtung (11) zum seitlichen Spritzen umfasst, um das Spritzen von Flüssigkeit von jeder Seite seitlich von dem Wischer zu gestatten, wobei die Vorrichtung (11) zum seitlichen Spritzen eine Zufuhrkanüle (35), einen Verteilungskanal (39) der Flüssigkeit und mindestens zwei Spritzdüsen (28) der Flüssigkeit umfasst, wobei die Düsen (28) und die Zufuhrkanüle (35) fluidisch mit Hilfe des Verteilungskanals (39) verbunden sind, wobei die Düsen (28) auf beiden Seiten einer Achse (A) angeordnet sind, die durch die Zufuhrkanüle (35) definiert wird, **dadurch gekennzeichnet, dass** der Arm (3) eine Positionierungsöffnung (45) in jeder Seitenwand (47) umfasst, und dadurch, dass im montierten Zustand die Spritzvorrichtung (11) seitlich mit ihren Spritzdüsen (28) über den Wischerarm (3) hinausragt.

2. Wischerarm (3) nach Anspruch 1, **dadurch gekennzeichnet, dass** die Düsen (28) symmetrisch in Bezug auf die Achse (A) angeordnet sind, die von der Zufuhrkanüle (35) definiert wird.

3. Wischerarm (3) nach Anspruch 1 oder 2, **dadurch gekennzeichnet, dass** die Düsen (28) jeweils eine allgemeine Spritzrichtung parallel zueinander aufweisen.

4. Wischerarm (3) nach einem der Ansprüche 1 bis 3, **dadurch gekennzeichnet, dass** die Düsen (28) jeweils eine allgemeine geneigte Spritzrichtung aufweisen, welche sich von der Achse (A) entfernt, die von der Zufuhrkanüle definiert wird.

5. Wischerarm (3) nach einem der vorhergehenden Ansprüche, **dadurch gekennzeichnet, dass** die Vorrichtung (11) zum seitlichen Spritzen aus einer Spritzbasis (17) und einer Abdeckung (19) zum Zuführen einer Reinigungsflüssigkeit gebildet ist, wobei die Basis (17) an der Abdeckung (19) befestigt ist, und dadurch, dass der Verteilungskanal (39) der Flüssigkeit auf der Höhe der Verbindung zwischen der Basis (17) und der Abdeckung (19) durch komplementäre Vertiefungsformen (25, 31) in der Form von offenen Rillen gebildet ist, von denen eine (25) von der Basis (17) und die andere (31) von der Abdeckung (19) getragen wird, dadurch, dass die Basis (17), auf der Höhe jedes Endes mindestens eine Spritzdüse (28) aufweist, und die Abdeckung (19) die Zufuhrkanüle (35) umfasst.

6. Wischerarm (3) nach dem vorhergehenden Anspruch, **dadurch gekennzeichnet, dass** die eine der Vertiefungen (31) von einer Befestigungsrippe (41) umgeben ist, und die andere Vertiefung (25) von einem Befestigungshals (43) komplementär zur Befestigungsrippe (41).

7. Wischerarm (3) nach einem der Ansprüche 5 bis 6, **dadurch gekennzeichnet, dass** die Basis (17) und die Abdeckung (19) durch Schweißen aneinander befestigt sind, insbesondere mittels Ultraschalls.

8. Wischerarm (3) nach einem der Ansprüche 1 bis 4, **dadurch gekennzeichnet, dass** die Vorrichtung zum seitlichen Spritzen (11) aus einem Monoblockstück besteht.

9. Wischerarm (3) nach einem der vorhergehenden Ansprüche, **dadurch gekennzeichnet, dass** die Vorrichtung zum seitlichen Spritzen (11) eine allgemeine Parallelepipedform aufweist.

10. Wischerarm (3) nach einem der vorhergehenden Ansprüche, **dadurch gekennzeichnet, dass** die Vorrichtung zum seitlichen Spritzen (11) Queröffnungen (53) umfasst, welche dazu bestimmt sind, Schweißvorsprünge (51) aufzunehmen, die von dem Wischerarm (3) getragen werden.

11. Wischerarm (3) nach einem der Ansprüche 1 bis 9, **dadurch gekennzeichnet, dass** die Vorrichtung zum seitlichen Spritzen (11) Einrastarme (55) umfasst, die dazu bestimmt sind, mit den assoziierten Rippen (57) zusammenzuwirken, die von dem Wischerarm (3) getragen werden.

12. Wischerarm (3) nach Anspruch 10, **dadurch gekennzeichnet, dass** der Arm Schweißvorsprünge (51) umfasst, welche mit den Queröffnungen (53) zusammenwirken, die in der Spritzvorrichtung eingerichtet sind.

13. Wischerarm (3) nach Anspruch 11, **dadurch gekennzeichnet, dass** der Arm (3) Rippen (57) umfasst, welche mit den Einrastarmen (55) zusammenwirken, die von der Spritzvorrichtung getragen werden.

14. Wischerarm (3) nach einem der vorhergehenden Ansprüche, **dadurch gekennzeichnet, dass** die Spritzvorrichtung (11) im Wesentlichen in der Mitte des Arms in seiner Längsrichtung angeordnet ist.

15. Wischersystem (1), umfassend einen Wischerarm nach einem der Ansprüche 1 bis 14.

## Claims

1. Wiper arm (3) for a system for wiping a pane of a motor vehicle, the wiper arm comprises a device (11) for lateral spraying so as to allow liquid to be sprayed on each lateral side of the wiper, the device (11) for lateral spraying comprises a supply cannula (35), a duct for distributing the liquid (39) and at least two nozzles (28) for spraying the liquid, the nozzles (28) and the supply cannula (35) being fluidically connected via the intermediary of the distribution duct (39), the nozzles (28) are arranged on either side of an axis (A) defined by the supply cannula (35), **characterized in that** the arm (3) comprises a positioning opening (45) in each lateral wall (47) and **in that**, in the installed state, the spraying device (11) projects laterally, with its spraying nozzles (28), from the wiper arm (3).

2. Wiper arm (3) according to Claim 1, **characterized in that** the nozzles (28) are arranged symmetrically with respect to the axis (A) defined by the supply cannula (35).

3. Wiper arm (3) according to Claim 1 or 2, **characterized in that** the nozzles (28) each have a general spraying direction parallel with one another.

4. Wiper arm (3) according to any one of Claims 1 to 3, **characterized in that** the nozzles (28) each have an inclined general spraying direction, away from the axis (A) defined by the supply cannula.

5. Wiper arm (3) according to any one of the preceding claims, **characterized in that** it is formed of a spraying base (17) and of a washing liquid supply cover (19), the base (17) being attached to the cover (19), and **in that** the duct for distributing the liquid (39) is formed at the junction between the base (17) and the cover (19) by matching imprint shapes (25, 31) in the form of open grooves of which one (25) is borne by the base (17) and the other (31) by the cover (19), **in that** the base (17) has at each end at least one spraying nozzle (28) and the cover (19) comprises the supply cannula (35).

6. Wiper arm (3)according to the preceding claim, **characterized in that** one of the imprints (31) is surrounded by an attachment rib (41) and the other imprint (25) by an attachment channel (43) matching the attachment rib (41).

7. Wiper arm (3)according to any one of Claims 5 to 6, **characterized in that** the base (17) and the cover (19) are attached to one another by welding, in particular by ultrasound.

8. Wiper arm (3) according to any one of Claims 1 to 4, **characterized in that** the device consists of a single solid part.

9. Wiper arm (3) according to any one of the preceding claims, **characterized in that** it has a parallelepipedal general shape.

10. Wiper arm (3) according to any one of the preceding claims, **characterized in that** it comprises through openings (53) designed to receive welding projections (51) borne by the wiper arm (3).

11. Wiper arm (3) according to any one of Claims 1 to 9, **characterized in that** it comprises snap-fitting arms (55) designed to engage with associated ribs (57) borne by the wiper arm (3).

12. Wiper arm according to Claim 10, **characterized in that** the arm comprises welding projections (51) engaging with through openings (53) created in the spraying device.

13. Wiper arm according to Claim 11, **characterized in that** the arm (3) comprises ribs (57) engaging with snap-fitting arms (55) borne by the spraying device.

14. Wiper arm according to any one of the preceding claims, **characterized in that** the spraying device (11) is located essentially at the middle of the arm in its longitudinal direction.

15. Wiping system (1) comprising a wiper arm according to any one of Claims 1 to 14.
